# EUROPEAN PATENT SPECIFICATION

(11) **EP 3 329 784 B1**
(45) Date of publication and mention of the grant of the patent: **09.10.2024**
(21) Application number: 16830687.6
(22) Date of filing: 02.06.2016
(51) Int. Cl.: A23D 9/06, A23D 9/013, C11B 5/00

(54) **ANTIOXIDANT COMPOSITION FOR OIL, PREPARATION METHOD THEREFOR, COOKING OIL CONTAINING SAME, AND METHOD FOR PREPARING COOKING OIL**
ANTIOXIDATIONSMITTELZUSAMMENSETZUNG FÜR ÖL, HERSTELLUNGSVERFAHREN DAFÜR, SPEISEÖL DAMIT UND VERFAHREN ZUR HERSTELLUNG VON SPEISEÖL
COMPOSITION ANTIOXYDANTE POUR HUILE, SON PROCÉDÉ DE PRÉPARATION, HUILE DE CUISSON EN CONTENANT, ET PROCÉDÉ DE PRÉPARATION D'HUILE DE CUISSON

(30) Priority: 27.07.2015 KR 20150105801
(43) Date of publication of application: 06.06.2018
(73) Proprietor: CJ Cheiljedang Corporation, Seoul 04560 (KR)
(72) Inventor: LEE, Eun Hye, Seoul 08098 (KR); MIN, Keun Young, Anyang-si Gyeonggi-do 13920 (KR); MIN, Bock Ki, Seoul 08586 (KR); KIM, Chul Jin, Seoul 08211 (KR); JUNG, Dong Chul, Incheon 21969 (KR)
(74) Representative: Cabinet Beau de Loménie
(86) International application number: PCT/KR2016/005861
(87) International publication number: WO 2017/018654

(56) References cited:
- WO-A1-2014/027321
- WO-A1-2016/053971
- JP-A- 2001 269 115
- JP-A- 2015 033 335
- JP-A- 2015 116 188
- US-A1- 2008 085 357
- US-A1- 2011 212 183
- US-A1- 2011 250 299
- US-A1- 2014 377 435
- US-A1- 2014 377 435
- SHRIYESH PATEL ET AL: "Antioxidant potential of herbs and spices during deep frying of ghee", INTERNATIONAL JOURNAL OF DAIRY TECHNOLOGY, vol. 67, no. 3, 1 August 2014 (2014-08-01), GB, pages 365 - 372, XP055546267, ISSN: 1364-727X, DOI: 10.1111/1471-0307.12131
- DOMINIK KMIECIK ET AL: "Stabilization of phytosterols in rapeseed oil by natural antioxidants during heating", EUROPEAN JOURNAL OF LIPID SCIENCE AND TECHNOLOGY., vol. 111, no. 11, 1 November 2009 (2009-11-01), DE, pages 1124 - 1132, XP055546269, ISSN: 1438-7697, DOI: 10.1002/ejlt.200800304

## Description

### [Technical Field]

The present invention relates to an antioxidant composition for oils, a method of preparing the same, a cooking oil including the same, and a method of preparing the same.

### [Background Art]

Generally, since vegetable cooking oil used for frying in food restaurants is reused several times, a mixture of animal fat and oil, water, impurities, fatty acids, etc., from chickens or other meats are likely to be contaminated and acidified. As a result, a fried food is deteriorated in quality due to discoloration, rancid odor, and generation of toxic substances. Thus, after a certain period of usage time, the used cooking oil needs to be discarded and replaced.

Cooking oil used for frying cannot be used any longer when used repeatedly many times. This is because ingredients of a food material, seasonings, and salts are dissolved in the oil and accelerate acidification of the oil, causing changes in color value of the oil and color of a fried food. In addition, moisture generated from the food material increases the water content of the oil, and the amount of free fatty acid is increased due to heat polymerization, thermal decomposition and oxidation of the oil, causing increase in acid value of the oil.

An acid value is an indicator of a degree of acidification of oils. In accordance with Korean Food Standards Codex, Chapter 7, Standards and Specifications for Food and Hospitality cooked food, Section 3, Standards for Cooking and Cleanliness, a cooking oil having an acid value higher than 3.0 is recommended to be replaced with new cooking oil. However, in actual fried food restaurants, even when the acid value of cooking oil is 3.0 or less, and the cooking oil is replaced with new one so as to avoid deterioration in quality of a fried food since discoloration of the oil is accelerated due to impurities generated from a food material, causing change in color of a fried food and thus deterioration of the food. This leads to increase in price of fried foods, resulting in increase in consumer expenses and an environmental problem due to increase in the amount of cooking oil waste.

In order to control rise in acid value due to repeated use of cooking oil, there has been proposed a method in which a lipid-soluble component (tocopherol) is mixed with a water-soluble component extracted from green tea leaves (catechin and polyphenol) to prepare a cooking oil having improved oxidation stability (Korean Patent Publication No. 2009-0118341) and a method in which a small amount of antioxidant (0.1% to 1% of soybean lecithin, 0.01% to 1% of green tea-extracted polyphenol, and 0% to 0.1% of propyl gallate) is added to prepare a cooking oil for frying or eating raw having improved oxidation stability (Japanese Patent Publication No. 1990-069142). However, these methods have a problem in that discoloration of cooking oil is accelerated upon heating due to the presence of a green tea extract.

WO 2016/053971 describes a stabilized composition comprising an edible oil and an antioxidant composition comprising α-lipoic acid. WO 2014/027321 describes an oil, fat or cosmetic preparation comprising green tea extract and rosemary extract. US 2014/377435 describes a composition comprising (a) 1-20% of a first component selected from a polyphenol and/or a phenolic diterpene, (b) 2-20% oa a glyceride, (c) 3-60% of a hydrophilic emulsifier, (d) 3-60% of a hydrophobic emulsifier, and (e) 0-30% water. US 2011/212183 describes a composition for improving oxidation stability of a marine oil, comprising at least one tocopherol and/or tocopherol derivative, rosemary extract or an active fraction thereof, ascorbic acid and/or an ascorbic acid derivative and green tea extract or an active fraction of said green tea extract, said green comprising a carrier. US 2011/250299 describes a thermo-reversible, structured phospholipid organogel composition comprising a phospholipid composition; an organic solvent; a water soluble polymer; and a polar solvent, which composition may further comprise green tea extract among other additional ingredients. Patel et al. (International Journal of Dairy Technology 2014, 67(3), 365-372) report the results of a study aimed at evaluating the antioxidant potential of various herbs and spices during deep frying of ghee. Kmiecik et al. (Eur. J. Lipid Sci. Technol. 2009, 111, 1124-1132) is a research paper on the stabilization of phytosterols in rapeseed oil by natural anti-oxidants (ethanol extracts of rosemary, green tea and BHT) during heating.

### [Disclosure]

### [Technical Problem]

It is one aspect of the present invention to provide an antioxidant composition for oils which is effective in controlling discoloration of a cooking oil upon heating, thereby improving quality of a fried food prepared using the cooking oil and extending the replacement cycle of the cooking oil.

It is another aspect of the present invention to provide an antioxidant composition for oils which is clearly and uniformly dispersed in a cooking oil and thus can effectively inhibit acidification or discoloration of the cooking oil during cooking, thereby allowing the color of a fried food and the used cooking oil to be clear.

It is a further aspect of the present invention to provide an antioxidant composition for oils which has good color value stability upon heating, and a cooking oil including the same.

The present invention is defined by the claims.

### [Technical Solution]

In accordance with one aspect of the present invention, an antioxidant composition for oils includes: a water-soluble antioxidant component-containing extract; and a food-grade emulsifier, as defined in claim 1.

In accordance with another aspect of the present invention, the antioxidant composition for oils further includes tocopherol.

In accordance with a further aspect of the present invention, a cooking oil includes the antioxidant composition for oils according to the claims.

In accordance with yet another aspect of the present invention, a method of preparing an antioxidant composition for oils and according to the claims includes mixing an antioxidant component-containing extract with a food-grade emulsifier.

In accordance with yet another aspect of the present invention, a method of preparing a cooking oil includes mixing the antioxidant composition for oils according to the claims with a vegetable oil or an animal oil.

### [Advantageous Effects]

The present invention provides an antioxidant composition for oils which is effective in controlling discoloration of a cooking oil upon heating, can improve quality of a fried food prepared using the cooking oil and effectively inhibit acidification or discoloration of the cooking oil, thereby extending the replacement cycle of the cooking oil.

In addition, the present invention provides an antioxidant composition for oils which can be clearly and uniformly dispersed in a cooking oil and can have good color value stability upon heating, thereby allowing the color of a fried food and the used cooking oil to be clear.

### [Description of Drawings]

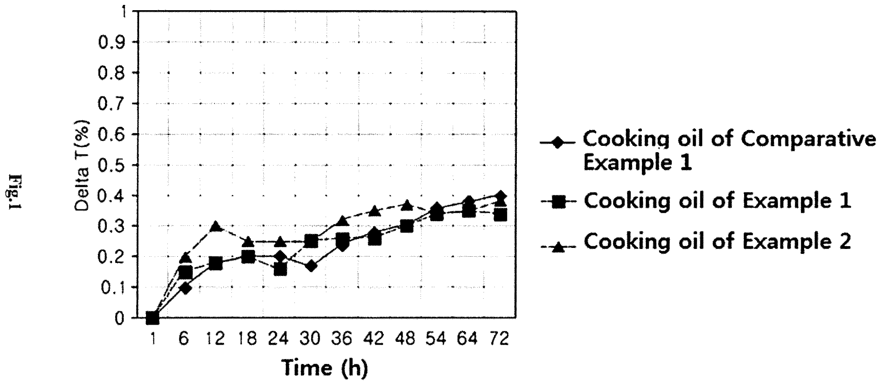

FIG. 1 is a graph showing changes in transmittance of each cooking oil sample of Example 1, Example 2, and Comparative Example 1, as measured at room temperature (25°C) for 3 days.

### [Best Mode]

Hereinafter, embodiments of the present invention will be described in detail. In addition, descriptions of details apparent to those skilled in the art will be omitted for clarity.

One aspect of the present invention relates to an antioxidant composition for oils which includes a water-soluble antioxidant component-containing extract and a food-grade emulsifier, wherein the water-soluble antioxidant component-containing extract comprises at least one selected from among a rosemary extract, a coffee bean extract, a cocoa extract, a grape peel extract, an onion peel extract, an acai berry extract, a clove extract, a sage extract, an olive-derived extract, a black rice bran extract, a sugarcane extract, and a purple sweet potato extract, wherein the extract comprises water-soluble polyphenol which is present in an amount of 20 to 500 mg/g in said extract, wherein the food-grade emulsifier comprising at least one selected from among fatty acid monoglycerides, sorbitan fatty acid esters, fatty acid esters of sucrose, and lecithin; and wherein the water-soluble antioxidant component-containing extract is present in an amount of 1 wt% to 30 wt%, based on the total weight of the antioxidant composition, and the food-grade emulsifier is present in an amount of 70 wt% to 99 wt% based on the total weight of the antioxidant composition.

Herein, "water-soluble antioxidant component" in the water-soluble antioxidant component-containing extract may be, for example, polyphenol. Specifically, the water-soluble antioxidant component may be water-soluble polyphenol.

The water-soluble antioxidant component-containing extract includes at least one of a green tea extract, a rosemary extract, a coffee bean extract, a cocoa extract, a grape peel extract, an onion peel extract, an acai berry extract, a clove extract, a sage extract, an olive-derived extract, a black rice bran extract, a blueberry extract, and a purple sweet potato extract. Specifically, the water-soluble antioxidant component-containing extract may be an olive-derived extract or a sugarcane extract. The extract contains water-soluble polyphenol. Herein, a "polyphenol" is a phenolic hydroxyl (OH) group-containing phenolic compound produced by photosynthesis of plants. In addition, the polyphenol is a molecular substance composed of two or more phenol molecules and is not toxic unlike benzene or phenol. Further, the polyphenol has one or more hydroxyl group-substituted aromatic rings, which can donate a hydrogen atom to a reactive free radical and convert the free radical into a stable non-radical product to eliminate active oxygen, thereby providing antioxidant effects. The water-soluble polyphenol is present in an amount of 20 mg/g to 500 mg/g in the water-soluble antioxidant component-containing extract. Within this range, the water-soluble polyphenol can effectively inhibit oxidation of oils.

Polyphenols are found in most plants and are known to be produced by plants for protection from UV light, active oxygen, and predators. Since a phenolic hydroxyl group has the ability to eliminate active oxygen, polyphenols are antioxidants.

Accelerated autoxidation is the most important reaction that affects acidification of frying oil or a fried food during an actual frying process. Generally, the action of inhibiting oxidation of easily oxidizable substances is called antioxidant action. Almost all antioxidation methods that have been used so far consist of eliminating radical formation factors or radical formation promoting factors in an initial reaction of autoxidation or in absorbing and eliminating active free radicals during the chain reaction of autoxidation to block some radical reactions, thereby reducing a rate of autoxidation. Reduction in the autoxidation rate results in a lengthened induction period and thus delayed acidification. Inhibition of autoxidation as described above can be achieved by adding a variety of specific compounds to a substrate or by a physical method, such as lowering the storage or heating temperature or blocking external light. Such a substance that effectively inhibits autoxidation of a substrate is called an antioxidant. Thus, the water-soluble antioxidant component-containing extract may include any extract containing the substance capable of inhibiting autoxidation of a substrate in addition to the aforementioned extracts.

The food-grade emulsifier is added to improve dispersion stability of the water-soluble antioxidant component-containing extract. Due to the presence of the water-soluble antioxidant component, the water-soluble antioxidant component-containing extract can suffer from deterioration in dispersion stability when mixed with cooking oil. Addition of the food-grade emulsifier allows the water-soluble antioxidant component-containing extract to be clearly and uniformly dispersed in cooking oil without phase separation.

The food-grade emulsifier includes at least one of fatty acid monoglycerides, sorbitan fatty acid esters, fatty acid esters of sucrose, and lecithin. Specifically, the food-grade emulsifier may be lecithin.

Examples of the lecithin may include: plant lecithin such as soybean lecithin, canola lecithin, corn lecithin, and sunflower lecithin: and animal lecithin such as egg white lecithin. The lecithin may include natural crude lecithin, highly purified lecithin obtained by removing impurities such as neutral lipids, fatty acids, carbohydrates, proteins, inorganic salts, sterols, and pigments from the crude lecithin, and enzymatically decomposed lecithin.

In addition, the lecithin is effective in preventing spattering of cooking oil, particularly baking oil or frying oil, during cooking, preventing generation of odor upon heating, and reducing oiliness of fried food. However, depending on the usage thereof, the lecithin can cause discoloration of cooking oil to be accelerated when a frying process is repeated for a long time.

When the antioxidant composition for oils including the water-soluble antioxidant component-containing extract and the food-grade emulsifier is added to a cooking oil such as a vegetable oil or an animal oil, color value stability of the cooking oil upon heating can be improved and deterioration of a fried food prepared using the cooking oil can be suppressed, wherein the replacement cycle of the cooking oil can be extended.

The water-soluble antioxidant component-containing extract is present in an amount of 1 wt% to 30 wt%, specifically 5 wt% to 20 wt%, more specifically 5 wt% to 15 wt%, based on the total weight of the antioxidant composition.

The food-grade emulsifier is present in an amount of 70 wt% to 99 wt%, specifically 80 wt% to 95 wt%, more specifically 85 wt% to 95 wt%, based on the total weight of the antioxidant composition. Within this range, the antioxidant composition can effectively inhibit discoloration of cooking oil upon heating and can have improved dispersion stability.

Another aspect of the present invention relates to an antioxidant composition for oils which includes an antioxidant component-containing extract and a food-grade emulsifier, as defined above, wherein the antioxidant composition further includes tocopherol. Therefore, the tocopherol will now be mainly described. Herein, "tocopherol" is a group of derivatives of fat-soluble vitamin E, and four kinds of tocopherol, i.e., α-tocopherol, β-tocopherol, γ-tocopherol, and δ-tocopherol exist in nature. Particularly, α-tocopherol has the greatest antioxidant effect, followed by β-tocopherol, γ-tocopherol or δ-tocopherol. However, the magnitude of in vitro antioxidant activity for general cooking oils is in the order of δ-tocopherol > γ-tocopherol > β-tocopherol > α-tocopherol.

In this aspect, the water-soluble antioxidant component-containing extract is present in an amount of 1 wt% to 30 wt%, specifically 5 wt% to 20 wt%, more specifically 5 wt% to 15 wt%, based on the total weight of the antioxidant composition. The food-grade emulsifier is present in an amount of 60 wt% to 98 wt%, specifically 65 wt% to 95 wt%, more specifically 70 wt% to 90 wt%, based on the total weight of the antioxidant composition. In addition, tocopherol is present in an amount of 1 wt% to 30 wt%, specifically 5 wt% to 20 wt%, more specifically 5 wt% to 15 wt%, based on the total weight of the antioxidant composition. When the amount of each component of the antioxidant composition falls within this range, the antioxidant composition can effectively inhibit coloration of cooking oil while exhibiting improved dispersion stability.

A further aspect of the present invention relates to a method of preparing the antioxidant composition according to the present invention. The method may include mixing the antioxidant component-containing extract with the food-grade emulsifier and, optionally, adding the tocopherol thereto. Here, the mixing may include stirring at 20°C to 60°C and 500 rpm to 1500 rpm for 15 minutes to 3 hours. Specifically, the mixing may include stirring at 40°C to 60°C and 600 rpm to 1000 rpm for 30 minutes to 1 hour. When the mixing is carried out under these conditions, it is possible to prepare an antioxidant composition for oils, components of which are uniformly dispersed. In addition, it is possible to prepare an antioxidant composition for oils that can be clearly and uniformly dispersed in a cooking oil. In the method according to the present invention, an antioxidant composition capable of preventing discoloration of a cooking oil can be prepared at relatively low cost through a relatively simple process, as compared with typical methods, such as enhancing refining conditions to remove phospholipids and Fe, which are known to promote acidification of a cooking oil upon heating, or filtration using a filter or a porous material such as activated clay, silica gel or the like.

Yet another aspect of the present invention relates to a cooking oil including the antioxidant composition for oils according to the present invention. The cooking oil may include an animal oil or a vegetable oil. Examples of the vegetable oil include soybean oil, canola oil, corn oil, olive oil, sunflower oil, and brown rice oil. The antioxidant composition for oils may be present in an amount of 10 ppm to 1,500 ppm, specifically 10 ppm to 1,000 ppm, in the cooking oil. More specifically, when the cooking oil is soybean oil, the antioxidant composition for oils may be present in an amount of 10 ppm to 500 ppm, and, when the cooking oil is canola oil, the antioxidant composition for oils may be present in an amount of 10 ppm to 1,000 ppm. When the amount of the antioxidant composition for oils falls within this range, heat discoloration of the cooking oil can be controlled by virtue of antioxidant properties of the cooking oil, whereby quality of a fried food prepared using the cooking oil can be maintained and the cooking oil can have good color value stability upon heating. In one embodiment, the cooking oil may have a rate of change in color value of 5,000% or less, specifically 4,500% or less, as measured after heating at 200°C for 48 hours. Specifically, the rate of change in color value may be calculated by the following equation: {(T₁-T₀)/T₀} × 100, wherein T₀ denotes an initial color value of the cooking oil and T₁ denotes a color value of the cooking oil, as measured after heating at 200°C for 48 hours. Here, a lower rate of change in color value indicates better color value stability upon heating. In addition, the color value may be measured using a 1 inch cell in a Lovibond colorimeter and expressed by 10R+Y. The cooking oil including 10 ppm to 500 ppm of the antioxidant composition for oils can exhibit a rate of change in color value in the aforementioned range.

Yet another aspect of the present invention relates to a method of preparing a cooking oil including the antioxidant composition for oils according to the present invention. The method may include adding the antioxidant composition according to the present invention to a vegetable oil or an animal oil, followed by stirring. The antioxidant composition for oils may be present in an amount of 10 ppm to 1,500 ppm, specifically 10 ppm to 1,000 ppm, based on the total weight of the cooking oil. More specifically, when the cooking oil is soybean oil, the antioxidant composition for oils may be present in an amount of 10 ppm to 500 ppm, and, when the cooking oil is canola oil, the antioxidant composition for oils may be present in an amount of 10 ppm to 1,000 ppm. Here, the stirring may include stirring at 5,000 rpm to 20,000 rpm for 1 minute to 2 hours, or at 7,000 rpm to 15,000 rpm for 1 minute to 1 hour using a suitable stirrer, for example, a homogenizer. When the stirring is carried out under these conditions, the antioxidant composition for oils can be clearly and uniformly dispersed in the cooking oil. In addition, the cooking oil prepared by the method can be controlled in heat discoloration to allow the quality of fried foods to be kept constant, thereby having extended replacement cycle and exhibiting good color value stability upon heating.

Hereinafter, the present invention will be described in more detail with reference to examples. However, it should be noted that these examples are provided for illustration only and should not be construed in any way as limiting the invention.

Another aspect of the invention relates to the use of an antioxidant composition as defined above as an agent inhibiting the discoloration of cooking oil upon heating.

### EXAMPLE

### Preparative Example 1: Antioxidant composition for oils 1

### An antioxidant composition for oils 1 was prepared by the following method:

10% (w/w) of an olive-derived extract (imported and sold by Aju Pharm Co., Ltd., polyphenol content: 20 mg/g) was mixed with 2% (w/w) of soybean lecithin (imported and sold by Seyang Trading Co., Ltd.) and 88% (w/w) of glycerin fatty acid ester (Almax series, ILSHIN WELLS Co., Ltd.), followed by stirring at 50°C at 800 rpm for 45 minutes, thereby obtaining a polyphenol-containing antioxidant composition for oils 1.

### Preparative Example 2: Antioxidant composition for oils 2

### An antioxidant composition for oils 2 was prepared by the following method:

10% (w/w) of an olive-derived extract (imported and sold by Aju Pharm Co., Ltd., polyphenol content: 20 mg/g) was mixed with 2% (w/w) of soybean lecithin (imported and sold by Seyang Trading Co., Ltd.), 5% (w/w) of tocopherol (imported and sold by Namyoung Co.), and 83% (w/w) of glycerin fatty acid ester (Almax series, ILSHIN WELLS Co., Ltd.), followed by stirring at 50°C at 800 rpm for 45 minutes, thereby obtaining an antioxidant composition for oils 2.

### Preparative Example 3: Antioxidant composition for oils 3

An antioxidant composition for oils 3 was prepared by the following method:
10% (w/w) of an onion peel extract (Inno-NutriBio sample: polyphenol content 190 mg/g) was mixed with 2% (w/w) of soybean lecithin (imported and sold by Seyang Trading Co., Ltd.), 5% (w/w) of tocopherol (imported and sold by Namyoung Co.), and 83% (w/w) of glycerin fatty acid ester (Almax series, ILSHIN WELLS Co., Ltd.), followed by stirring at 50°C at 800 rpm for 45 minutes, thereby obtaining an antioxidant composition for oils 3.

### Preparative Example 4: Antioxidant composition for oils 4

An antioxidant composition for oils 4 was prepared by the following method:
10% (w/w) of a sugarcane extract (Neo Cremar Co., Ltd., polyphenol content: 190 mg/g) was mixed with 2% (w/w) of soybean lecithin (imported and sold by Seyang Trading Co., Ltd.), 5% (w/w) of tocopherol (imported and sold by Namyoung Co.), and 83% (w/w) of glycerin fatty acid ester (Almax series, ILSHIN WELLS Co., Ltd.), followed by stirring at 50°C at 800 rpm for 45 minutes, thereby obtaining an antioxidant composition for oils 4.

### Preparative Example 5: Antioxidant composition for oils 5

An antioxidant composition for oils 5 was prepared by the following method:
20% (w/w) of an olive-derived extract (imported and sold by Aju Pharm Co., Ltd., polyphenol content: 20 mg/g) was mixed with 5% (w/w) of soybean lecithin (imported and sold by Seyang Trading Co., Ltd.) and 75% (w/w) of glycerin fatty acid ester (Almax series, ILSHIN WELLS Co., Ltd.), followed by stirring at 50°C at 800 rpm for 45 minutes, thereby obtaining a polyphenol-containing antioxidant composition for oils 5.

### Preparative Example 6: Antioxidant composition for oils 6

An antioxidant composition for oils 6 was prepared by the following method:
20% (w/w) of an olive-derived extract (imported and sold by Aju Pharm Co., Ltd., polyphenol content: 20 mg/g) was mixed with 5% (w/w) of soybean lecithin (imported and sold by Seyang Trading Co., Ltd.), 10% (w/w) of tocopherol (imported and sold by Namyoung Co.), and 65% (w/w) of glycerin fatty acid ester (Almax series, ILSHIN WELLS Co., Ltd.), followed by stirring at 50°C at 800 rpm for 45 minutes, thereby obtaining a polyphenol-containing antioxidant composition for oils 6.

### Example 1: Preparation of cooking oil 1

The antioxidant composition for oils 1 prepared in Preparative Example 1 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 1.

### Example 2: Preparation of cooking oil 2

The antioxidant composition for oils 2 prepared in Preparative Example 2 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 2.

### Example 3: Preparation of cooking oil 3

The antioxidant composition for oils 3 prepared in Preparative Example 3 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 3.

### Example 4: Preparation of cooking oil 4

The antioxidant composition for oils 4 prepared in Preparative Example 4 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 4.

### Example 5: Preparation of cooking oil 5

The antioxidant composition for oils 2 prepared in Preparative Example 2 was added to refined canola oil (Baekseol canola oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 5.

### Example 6: Preparation of cooking oil 6

The antioxidant composition for oils 5 prepared in Preparative Example 5 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 6.

### Example 7: Preparation of cooking oil 7

The antioxidant composition for oils 6 prepared in Preparative Example 6 was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a cooking oil 7.

### Comparative Example 1: Preparation of comparative cooking oil 1

Commercially available refined soybean oil (Baekseol soybean oil, CJ Cheiljedang Co., Ltd.) prepared through a typical refinement process was used as a comparative cooking oil 1.

### Comparative Example 2: Preparation of comparative cooking oil 2

Commercially available refined canola oil (Baekseol canola oil, CJ Cheiljedang Co., Ltd.) prepared through a typical refinement process was used as a comparative cooking oil 2.

### Comparative Example 3: Preparation of comparative cooking oil 3

Commercially available tocopherol (imported and sold by Namyoung Co.) was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a comparative cooking oil 3.

### Comparative Example 4: Preparation of comparative cooking oil 4

A commercially available green tea extract (DS-ETP100, Doosan BioTech Co., Ltd.) was added to refined soybean oil (Baekseol soybean oil, CJ Cheiljedang Co., Ltd.) prepared through a typical refinement process to a concentration of 500 ppm, followed by stirring at 10,000 rpm for 30 minutes using a homogenizer (T. K. Homomixer mark II f model, Tokushu Kika Kogyo Co., Ltd.), thereby preparing a comparative cooking oil 4.

### Experimental Example

### Transmittance at room temperature

In order to determine dispersion stability of each of the cooking oil samples of Examples 1 and 2 and Comparative Example 1, the transmittance of each sample was measured at room temperature (25°C) for 3 days using a Turbiscan optical analyzer (Turbiscan AGS, Formulaction Inc.). The result was shown in Fig. 1.

As shown in FIG. 1, the cooking oil sample of Example 1 or 2 containing the antioxidant composition of oils according to the present invention exhibited a low time-dependent variation in transmittance (ΔT) of 1% or less, similar to that of the cooking oil sample of Comparative Example 1, which was free from the antioxidant composition. Therefore, it can be seen that, despite including the antioxidant composition for oils, the cooking oil according to the present invention has a small difference in transmittance from a cooking oil free from the antioxidant composition since the antioxidant composition for oils is uniformly and clearly dispersed in the cooking oil.

### Measurement of acid value and color value

200 g of each of the cooking oil samples of Examples 1 to 5 and Comparative Examples 1 to 4 was placed in a 500 mL round bottom flask, which, in turn, was heated to 200°C for 48 hours in a heating mantle (MS-DM603, MISUNG SCIENTIFIC Co., Ltd.). The cooking oil sample was collected after 8, 16, 24, 32, 40, and 48 hours from the start of heating, followed by measurement of the acid value and color value of the oil.

Here, the acid value of the sample was measured in accordance with the Food Ingredient Test Method of Korean Food Standards Codex (1.1.5.3 Acid Value, 2013, Korea Food Industry Association), and the color value was measured using a 1 inch cell in a Lovibond colorimeter and expressed by 10R+Y.

Results of measuring the acid value and color value of the cooking oil samples of Comparative Example 1 and Example 1 are shown in Table 1.

**Table 1**

| Item | Heating time (h) | Acid value (AV) | Color value |
|---|---|---|---|
| Comparative Example 1: comparative cooking oil (typical refined soybean oil) | 0 | 0.028 | 1.8 |
| | 8 | 0.140 | 2.8 |
| | 16 | 0.175 | 7.6 |
| | 24 | 0.252 | 14.7 |
| | 32 | 0.456 | 30.0 |
| | 40 | 0.748 | 61.0 |
| | 48 | 1.128 | 122.0 |
| Change in color value after holding at 200°C for 48 h ({(T₁-T₀)/T₀} × 100) | | | 6678% |
| Example 1: cooking oil | 0 | 0.028 | 1.8 |
| | 8 | 0.110 | 2.8 |
| | 16 | 0.140 | 6.1 |
| | 24 | 0.210 | 9.9 |
| | 32 | 0.368 | 18.3 |
| | 40 | 0.628 | 36.0 |
| | 48 | 0.972 | 78.0 |
| Change in color value after holding at 200°C for 48 h ({(T₁-T₀)/T₀} × 100) | | | 4233% |

From the results in Table 1, it can be seen that the cooking oil of Example 1 including the antioxidant composition for oils 1 according to the present invention had a lower acid value and color value upon heating than the cooking oil sample of Comparative Example 1 and thus exhibited good properties in terms of inhibition of oxidation and discoloration.

Results of measuring the acid value and color value of the cooking oil samples of Comparative Example 1 and Example 2 are shown in Table 2.

**Table 2**

| Item | Heating time (h) | Acid value (AV) | Color value |
|---|---|---|---|
| Comparative Example 1: comparative cooking oil (typical refined soybean oil) | 0 | 0.040 | 1.8 |
| | 8 | 0.137 | 5.6 |
| | 16 | 0.206 | 10.7 |
| | 24 | 0.310 | 18.6 |
| | 32 | 0.521 | 38.0 |
| | 40 | 0.802 | 64.0 |
| | 48 | 1.134 | 124.0 |
| Change in color value after holding at 200°C for 48 h ({(T₁-T₀)/T₀} × 100) | | | 6789% |
| Example 2: cooking oil | 0 | 0.040 | 1.8 |
| | 8 | 0.105 | 4.1 |
| | 16 | 0.165 | 7.8 |
| | 24 | 0.219 | 13.0 |
| | 32 | 0.323 | 20.8 |
| | 40 | 0.446 | 27.0 |
| | 48 | 0.613 | 39.0 |
| Change in color value after holding at 200°C for 48 h ({(T₁-T₀)/T₀} × 100) | | | 2067 % |

From the results in Table 2, it can be seen that the cooking oil of Example 2 further including the tocopherol according to the present invention had a lower acid value and color value upon heating than the cooking oil sample of Comparative Example 1. Particularly, the cooking oil sample of Example 2 had a rate of change in color value about 3.2 times lower than that of Comparative Example 1. Therefore, it can be seen that when the tocopherol is added, the cooking oil can have considerably improved properties in terms of both color value stability and inhibition of oxidation.

Results of measuring the acid value and color value of the cooking oil samples of Comparative Example 1 and Example 3 are shown in Table 3.

**Table 3**

| Item | Heating time (h) | Acid value (AV) | Color value |
|---|---|---|---|
| Comparative Example 1: comparative cooking oil (typical refined soybean oil) | 0 | 0.030 | 1.8 |
| | 8 | 0.100 | 2.7 |
| | 16 | 0.141 | 6.1 |
| | 24 | 0.210 | 11.1 |
| | 32 | 0.370 | 18.9 |
| | 40 | 0.514 | 38 |
| | 48 | 0.768 | 78 |
| Change in color value after holding at 200°C for 48 h ({(T₁-T₀)/T₀} × 100) | | | 4233% |
| Example 3: cooking oil | 0 | 0.030 | 1.8 |
| | 8 | 0.090 | 2.7 |
| | 16 | 0.139 | 6 |
| | 24 | 0.180 | 9.6 |
| | 32 | 0.280 | 15.5 |
| | 40 | 0.421 | 23 |
| | 48 | 0.698 | 43 |
| Change in color value after holding at 200°C for 48 h ({(T₁-T₀)/T₀} × 100) | | | 2288% |

From the results in Table 3, it can be seen that the cooking oil of Example 3 including the antioxidant composition for oils 3 according to the present invention had a lower acid value and color value upon heating than the cooking oil of Comparative Example 1, and thus had good properties in terms of inhibition of oxidation and discoloration.

Results of measuring the acid value and color value of the cooking oil samples of Comparative Example 1 and Example 4 are shown in Table 4.

**Table 4**

| Item | Heating time (h) | Acid value (AV) | Color value |
|---|---|---|---|
| Comparative Example 1: comparative cooking oil (typical refined soybean oil) | 0 | 0.042 | 2.1 |
| | 8 | 0.120 | 7.0 |
| | 16 | 0.234 | 11.1 |
| | 24 | 0.365 | 20.0 |
| | 32 | 0.633 | 40.0 |
| | 40 | 0.982 | 78.0 |
| | 48 | 1.559 | 130.0 |
| Change in color value after holding at 200°C for 48 h ({(T₁-T₀)/T₀} × 100) | | | 6090% |
| Example 4: cooking oil | 0 | 0.042 | 2.1 |
| | 8 | 0.100 | 5.6 |
| | 16 | 0.164 | 8.9 |
| | 24 | 0.238 | 14.0 |
| | 32 | 0.350 | 24.0 |
| | 40 | 0.584 | 39.0 |
| | 48 | 1.063 | 75.0 |
| Change in color value after holding at 200°C for 48 h ({(T₁-T₀)/T₀} × 100) | | | 3471 % |

From the results in Table 4, it can be seen that the cooking oil of Example 4 including the antioxidant composition for oils 4 according to the present invention had a lower acid value and color value than the cooking oil of Comparative Example 1, and thus had good properties in terms of inhibition of oxidation and discoloration.

Results of measuring the acid value and color value of the cooking oil samples of Comparative Example 2 and Example 5 are shown in Table 5.

**Table 5**

| Item | Heating time (h) | Acid value (AV) | Color value |
|---|---|---|---|
| Comparative Example 2: comparative cooking oil (typical refined canola oil) | 0 | 0.070 | 2.3 |
| | 8 | 0.147 | 7.7 |
| | 16 | 0.308 | 19.1 |
| | 24 | 0.768 | 53.0 |
| | 32 | 1.231 | 128.7 |
| | 40 | 1.897 | 169.7 |
| | 48 | 2.551 | 225.7 |
| Change in color value after holding at 200°C for 48 h ({(T₁-T₀)/T₀} × 100) | | | 9713% |
| Example 5: cooking oil | 0 | 0.070 | 3.1 |
| | 8 | 0.129 | 5.3 |
| | 16 | 0.232 | 10.1 |
| | 24 | 0.440 | 18.4 |
| | 32 | 0.676 | 31.0 |
| | 40 | 1.187 | 52.3 |
| | 48 | 1.743 | 109.3 |
| Change in color value after holding at 200°C for 48 h ({(T₁-T₀)/T₀} × 100) | | | 3426% |

From the results shown in Table 5, it can be seen that the cooking oil of Example 5 further including the tocopherol according to the present invention had a lower acid value and color value upon heating than the cooking oil of Comparative Example 2, and thus had good properties in terms of inhibition of oxidation and discoloration. Referring to the results in Tables 2 and 5, it can be seen that although the acid value and color value upon heating varied depending on the kind of cooking oil (soybean oil and canola oil), both of the samples of Example 2 and Example 5 exhibited improved properties in terms of oxidation stability and inhibition of discoloration.

Results of measuring the acid value and color value of the cooking oil samples of Comparative Examples 1 and 3 are shown in Table 6.

**Table 6**

| Item | Heating time (h) | Acid value (AV) | Color value |
|---|---|---|---|
| Comparative Example 1: comparative cooking oil (typical refined soybean oil) | 0 | 0.042 | 1.8 |
| | 8 | 0.139 | 4.4 |
| | 16 | 0.192 | 9.6 |
| | 24 | 0.285 | 18.3 |
| | 32 | 0.550 | 35.0 |
| | 40 | 0.809 | 61.0 |
| | 48 | 1.100 | 120.0 |
| Change in color value after holding at 200°C for 48 h ({(T₁-T₀)/T₀} × 100) | | | 6566% |
| Comparative Example 3: comparative cooking oil (containing tocopherol) | 0 | 0.042 | 1.8 |
| | 8 | 0.120 | 4.8 |
| | 16 | 0.154 | 8.9 |
| | 24 | 0.244 | 18.5 |
| | 32 | 0.415 | 31.9 |
| | 40 | 0.564 | 52.8 |
| | 48 | 0.909 | 100.1 |
| Change in color value after holding at 200°C for 48 h ({(T₁-T₀)/T₀} × 100) | | | 5461 % |

From the results in Table 6, the sample of Comparative Example 3 containing tocopherol had a slightly lower acid value and color value upon heating than the sample of Comparative Example 1, that is, a typical refined purified soybean cooking oil. Therefore, it was confirmed that both of the samples of Comparative Examples 1 and 3 exhibited relatively poor properties in terms of inhibition of oxidation and discoloration, as compared with the cooking oil including the antioxidant composition for oils according to the present invention.

Results of measuring the acid value and color value of the samples of Comparative Examples 1 and 4 are shown in Table 7.

**Table 7**

| Item | Heating time (h) | Acid value (AV) | Color value |
|---|---|---|---|
| Comparative Example 1: comparative cooking oil (typical refined soybean oil) | 0 | 0.040 | 1.8 |
| | 8 | 0.140 | 2.8 |
| | 16 | 0.175 | 7.6 |
| | 24 | 0.252 | 14.7 |
| | 32 | 0.456 | 30.0 |
| | 40 | 0.748 | 61.0 |
| | 48 | 1.128 | 122.0 |
| | 56 | 1.456 | 146.0 |
| Change in color value after holding at 200°C for 48 h ({(T₁-T₀)/T₀} × 100) | | | 6678% |
| Comparative Example 4: comparative cooking oil (containing green tea extract) | 0 | 0.040 | 1.7 |
| | 8 | 0.150 | 2.9 |
| | 16 | 0.176 | 7.7 |
| | 24 | 0.232 | 14.5 |
| | 32 | 0.426 | 27.5 |
| | 40 | 0.756 | 57.0 |
| | 48 | 1.025 | 100.0 |
| | 56 | 1.565 | 131.1 |
| Change in color value after holding at 200°C for 48 h ({(T₁-T₀)/T₀} × 100) | | | 5782% |

From the results in Table 7, the sample of Comparative Example 4 containing a green tea extract had a lower acid value and color value upon heating than the sample of Comparative Example 1, that is, a typical refined soybean cooking oil, but exhibited considerably poor properties in terms of inhibition of oxidation and discoloration, as compared with the cooking oil including the antioxidant composition for oils according to the present invention.

### Measurement of acid value and color value after frying

In order to conduct a frying test, raw chicken with batter applied thereto was cooked using each of the samples of Examples 2 and 5 and Comparative Examples 1 and 2.

Specifically, medium flour was mixed with water in a weight ratio of 1:0.5 to 1:3 to prepare a batter, followed by application of the batter to raw chicken (Chicken for Frying, Harim Co., Ltd.) in an amount of 5.0% to 20.0% (w/w) based on the weight of the raw chicken, and then 6.87 kg of the raw chicken with the batter applied thereto was fried in a 20 L fryer containing 16.5 kg of each of the samples of Examples and Comparative Examples at 170°C to 175°C for 8 hours a day. This procedure was repeated for 8 days (first heating: 8 hours on the first day, second heating: 8 hours on the second day, third heating: 8 hours on the third day ...). After the first heating, the second heating, the third heating ..., the color value and acid value of each of the samples upon heating for 8 hours were measured.

Here, the acid value of the sample was measured in accordance with the Food Ingredient Test Method of Korean Food Standards Codex (1.1.5.3 Acid Value, 2013, Korea Food Industry Association), and the color value was measured using a 1 inch cell in a Lovibond colorimeter and expressed by 10R+Y.

Results of measuring the acid value and color value of the samples of Comparative Example 1 and Example 2 are shown in Table 8.

**Table 8**

| Frying time (h) | Acid value (AV) | | Color value | |
|---|---|---|---|---|
| | Comparative Example 1 (soybean oil) | Example 2 (soybean oil) | Comparative Example 1 | Example 2 |
| 0 | 0.041 | 0.041 | 1.8 | 1.8 |
| 8 | 0.086 | 0.085 | 8.7 | 8.4 |
| 16 | 0.137 | 0.125 | 15.6 | 14.3 |
| 24 | 0.206 | 0.198 | 27.4 | 22.4 |
| 32 | 0.300 | 0.234 | 41.0 | 33.0 |
| 40 | 0.378 | 0.341 | 57.0 | 49.0 |
| 48 | 0.424 | 0.387 | 69.0 | 57.0 |
| 56 | 0.594 | 0.497 | 105.0 | 87.0 |
| 64 | 0.732 | 0.605 | 143.0 | 108.0 |

From the results in Table 8, it was confirmed that, after heating for 64 hours, the color value of the sample of Example 2 containing the antioxidant composition for oils according to the present invention reached a similar level to that of the sample of Comparative Example 1, that is, typical refined soybean oil, as measured after heating for 56 hours. Therefore, it can be seen that the cooking oil including the antioxidant composition for oils according to the present invention can be controlled in heat discoloration for a longer period of time than typical refined soybean cooking oils. In addition, it was confirmed that the sample of Example 2 had a lower acid value upon heating for frying than the sample of Comparative Example 1, that is, typical refined soybean oil. Therefore, it can be seen that the cooking oil according to the present invention can inhibit increase in acid value.

Results of measuring the acid value and color value of the samples of Comparative Example 2 and Example 5 are shown in Table 9.

**Table 9**

| Frying time (h) | Acid value | | Color value | |
|---|---|---|---|---|
| | Comparative Example 2 (canola oil) | Example 5 (canola oil) | Comparative Example | Example 5 |
| 0 | 0.070 | 0.070 | 2.0 | 3.1 |
| 8 | 0.131 | 0.128 | 13.4 | 13.9 |
| 16 | 0.180 | 0.178 | 26.8 | 28.4 |
| 24 | 0.258 | 0.224 | 44.0 | 40.0 |
| 32 | 0.384 | 0.334 | 65.0 | 52.0 |
| 40 | 0.455 | 0.374 | 90.0 | 72.0 |
| 48 | 0.542 | 0.451 | 110.0 | 94.0 |
| 56 | 0.751 | 0.553 | 154.0 | 142.0 |
| 64 | 0.863 | 0.773 | 168.0 | 154.0 |

From the results in Table 9, it was confirmed that, after heating for 64 hours, the color value of the sample of Example 5 containing the antioxidant composition for oils according to the present invention reached a similar level to that of the sample of Comparative Example 2, that is, typical refined canola oil, as measured after heating for 56 hours. Therefore, it can be seen that the cooking oil including the antioxidant composition for oils according to the present invention can be controlled in heat discoloration for a longer period of time than the cooking oil of Comparative Example 2. In addition, it was confirmed that the sample of Example 5 had a lower acid value upon heating for frying than the sample of Comparative Example 2, that is, typical refined canola oil. Therefore, it can be seen that the cooking oil according to the present invention can effectively inhibit increase in acid value. Referring to the results in Table 9, the sample of Example 5 exhibited a slightly higher acid value and color value than the sample of Example 2 of table 8. However, this is considered to be due to the difference in kind of cooking oil (canola oil and soybean oil). Therefore, it can be seen that the cooking oil including the antioxidant composition of oils according to the present invention has good properties in terms of oxidation stability and inhibition of discoloration.

## Claims

1. An antioxidant composition for oils, comprising:
a water-soluble antioxidant component-containing extract comprising at least one selected from among a rosemary extract, a coffee bean extract, a cocoa extract, a grape peel extract, an onion peel extract, an acai berry extract, a clove extract, a sage extract, an olive-derived extract, a black rice bran extract, a sugarcane extract, and a purple sweet potato extract, wherein the extract comprises water-soluble polyphenol which is present in an amount of 20 to 500 mg/g in said extract; and
a food-grade emulsifier comprising at least one selected from among fatty acid monoglycerides, sorbitan fatty acid esters, fatty acid esters of sucrose, and lecithin;
wherein the water-soluble antioxidant component-containing extract is present in an amount of 1 wt% to 30 wt%, based on the total weight of the antioxidant composition, and the food-grade emulsifier is present in an amount of 70 wt% to 99 wt% based on the total weight of the antioxidant composition.

2. The antioxidant composition for oils according to claim 1, further comprising: tocopherol.

3. The antioxidant composition for oils according to claim 2, wherein the water-soluble antioxidant component-containing extract is present in an amount of 1 wt% to 30 wt% based on the total weight of the antioxidant composition, the tocopherol is present in an amount of 1 wt% to 30 wt%, and the food-grade emulsifier is present in an amount of 60 wt% to 98 wt%.

4. A cooking oil comprising: the antioxidant composition for oils according to any one of claims 1 to 3; and an animal oil or a vegetable oil.

5. The cooking oil according to claim 4, wherein the antioxidant composition for oils is present in an amount of 10 ppm to 1,000 ppm in the cooking oil.

6. A method of preparing the antioxidant composition for oils as defined in any of claims 1 to 3, comprising:
mixing the antioxidant component-containing extract with the food-grade emulsifier.

7. The method according to claim 6, wherein the mixing comprises stirring at 20°C to 60°C and 500 rpm to 1500 rpm for 15 minutes to 3 hours.

8. The method according to claim 6 or 7, wherein the mixing comprises further adding tocopherol.

9. A method of preparing a cooking oil, comprising:
mixing the antioxidant composition for oils according to any one of claims 1 to 3 with a vegetable oil or an animal oil.

10. The method according to claim 9, wherein the mixing comprises stirring at 5,000 rpm to 20,000 rpm for 1 minute to 2 hours.

11. Use of an antioxidant composition as defined in any of claims 1 to 3 as an agent inhibiting the discoloration of cooking oil upon heating.

## Patentansprüche

1. Eine antioxidative Zusammensetzung für Öle, die Folgendes umfasst:
einen Extrakt, der eine wasserlösliche antioxidative Komponente enthält, wobei der Extrakt mindestens eines der folgenden Elemente umfasst: Rosmarinextrakt, Kaffeebohnenextrakt, Kakaoextrakt, Traubenschalenextrakt, Zwiebelschalenextrakt, Acai-Beerenextrakt, Nelkenextrakt, Salbeiextrakt, aus Oliven gewonnenen Extrakt, schwarzen Reiskleieextrakt, Zuckerrohrextrakt und violetten Süßkartoffelextrakt, wobei der Extrakt wasserlösliches Polyphenol umfasst, das in einer Menge von 20 bis 500 mg/g in dem Extrakt vorhanden ist; und
einen Emulgator in Lebensmittelqualität, der mindestens einen der folgenden Elemente umfasst: Fettsäuremonoglyceriden, Sorbitanfettsäureestern, Fettsäureestern von Saccharose und Lecithin;
wobei der Extrakt, der eine wasserlösliche antioxidative Komponente enthält, in einer Menge von 1 Gew.-% bis 30 Gew.-%, bezogen auf das Gesamtgewicht der antioxidative Zusammensetzung, vorhanden ist; und der Emulgator in Lebensmittelqualität in einer Menge von 70 Gew.-% bis 99 Gew.-%, bezogen auf das Gesamtgewicht der antioxidative Zusammensetzung, vorhanden ist.

2. Antioxidative Zusammensetzung für Öle nach Anspruch 1, ferner umfassend: Tocopherol.

3. Antioxidative Zusammensetzung für Öle nach Anspruch 2, wobei der Extrakt, der eine wasserlösliche antioxidative Komponente enthält, in einer Menge von 1 Gew.- % bis 30 Gew.-%, bezogen auf das Gesamtgewicht der antioxidative Zusammensetzung, vorhanden ist, das Tocopherol in einer Menge von 1 Gew.-% bis 30 Gew.-% vorhanden ist und der Emulgator in Lebensmittelqualität in einer Menge von 60 Gew.-% bis 98 Gew.-% vorhanden ist.

4. Speiseöl, umfassend: die antioxidative Zusammensetzung für Öle nach einem der Ansprüche 1 bis 3; und ein tierisches Öl oder ein pflanzliches Öl.

5. Speiseöl nach Anspruch 4, wobei die antioxidative Zusammensetzung für Öle in einer Menge von 10 ppm bis 1.000 ppm im Speiseöl vorhanden ist.

6. Verfahren zur Herstellung der antioxidativen Zusammensetzung für Öle nach einem der Ansprüche 1 bis 3, umfassend:
Mischen des Extrakts, der eine wasserlösliche antioxidative Komponente enthält, mit dem Emulgator in Lebensmittelqualität.

7. Verfahren nach Anspruch 6, wobei das Mischen Rühren bei 20°C bis 60°C und 500 U/min bis 1500 U/min für 15 Minuten bis 3 Stunden umfasst.

8. Verfahren nach Anspruch 6 oder 7, wobei das Mischen die weitere Zugabe von Tocopherol umfasst.

9. Verfahren zur Herstellung eines Speiseöls, umfassend:
Mischen der antioxidativen Zusammensetzung für Öle nach einem der Ansprüche 1 bis 3 mit einem pflanzlichen Öl oder einem tierischen Öl.

10. Verfahren nach Anspruch 9, wobei das Mischen das Rühren bei 5.000 U/min bis 20.000 U/min für 1 Minute bis 2 Stunden umfasst.

11. Verwendung einer antioxidativen Zusammensetzung nach einem der Ansprüche 1 bis 3 als Mittel, das die Verfärbung von Speiseöl beim Erhitzen verhindert.

## Revendications

1. Composition antioxydante pour huiles comprenant :
un extrait contenant un composant antioxydant hydrosoluble comprenant au moins un élément choisi parmi un extrait de romarin, un extrait de grain de café, un extrait de cacao, un extrait de pelure de raisin, un extrait de pelure d'oignon, un extrait de baie d'açaï, un extrait de clou de girofle, un extrait de sauge, un extrait dérivé d'olive, un extrait de son de riz noir, un extrait de canne à sucre et un extrait de patate douce violette, dans lequel l'extrait comprend un polyphénol hydrosoluble qui est présent en une quantité de 20 à 500 mg/g dans ledit extrait ; et
un émulsifiant de qualité alimentaire comprenant au moins un élément choisi parmi les monoglycérides d'acide gras, les esters d'acide gras de sorbitan, les esters d'acide gras de saccharose et la lécithine ;
dans lequel l'extrait contenant le composant antioxydant hydrosoluble est présent dans une quantité de 1% en masse à 30% en masse, par rapport à la masse totale de la composition antioxydante, et l'émulsifiant de qualité alimentaire est présent dans une quantité de 70% en masse à 99% en masse par rapport à la masse totale de la composition antioxydante.

2. Composition antioxydante pour huiles selon la revendication 1, qui comprend en outre du tocophérol.

3. Composition antioxydante pour huiles selon la revendication 2, dans laquelle l'extrait contenant le composant antioxydant hydrosoluble est présent dans une quantité de 1% en masse à 30% en masse, par rapport à la masse totale de la composition antioxydante, le tocophérol est présent dans une quantité de 1% en masse à 30% en masse, et l'émulsifiant de qualité alimentaire est présent dans une quantité de 60% en masse à 98% en masse.

4. Huile de cuisson comprenant la composition antioxydante pour huiles selon l'une quelconque des revendications 1 à 3, et une huile animale ou une huile végétale.

5. Huile de cuisson selon la revendication 4, dans laquelle la composition antioxydante pour huiles est présente dans une quantité de 10 ppm à 1000 ppm dans l'huile de cuisson.

6. Procédé de préparation de la composition antioxydante telle que définie dans l'une des revendications 1 à 3, qui comprend :
mélanger l'extrait contenant un composant antioxydant avec l'émulsifiant de qualité alimentaire.

7. Procédé selon la revendication 6, dans lequel le mélange comprend une agitation à 20°C à 60°C et 500 tr/min à 1500 tr/min pendant 15 minutes à 3 heures.

8. Procédé selon la revendication 6 ou 7, dans lequel le mélange comprend en outre l'addition de tocophérol.

9. Procédé de préparation d'une huile de cuisson, qui comprend:
mélanger la composition antioxydante pour huile selon l'une quelconque des revendications 1 à 3 avec une huile végétale ou une huile animale.

10. Procédé selon la revendication 9, dans lequel le mélange comprend une agitation à 5000 tr/min à 20000 tr/min pendant 1 minute à 2 heures.

11. Utilisation d'une composition antioxydante telle que définie dans l'une des revendications 1 à 3 comme agent inhibant la décoloration de l'huile de caisson à la chaleur.
